# EUROPEAN PATENT SPECIFICATION

(11) **EP 1 359 130 B1**
(45) Date of publication and mention of the grant of the patent: **06.04.2011**
(21) Application number: 02712276.1
(22) Date of filing: 30.01.2002
(51) Int. Cl.: C04B 35/5831

(54) **CUBIC BORON NITRIDE SINTERED BODY AND CUTTING TOOL**
KUBISCHES BORNITRID ENTHALTENDER SINTERKÖRPER UND SCHNEIDWERKZEUG
CORPS FRITTE CONTENANT UN NITRURE DE BORE CUBIQUE, ET INSTRUMENT DE COUPE

(30) Priority: 30.01.2001 JP 2001021790
(43) Date of publication of application: 05.11.2003
(73) Proprietor: Showa Denko K.K., Tokyo 105-8518 (JP)
(72) Inventor: ABE, Yoshihiko c/o Showa Denko K.K., Shiojiri-shi Nagano 399-6461 (JP); YANAGISAWA, Taishu c/o Showa Denko K.K., Shiojiri-shi, Nagano 399-6461 (JP); FUJIMORI, Masao c/o Showa Denko K.K., Shiojiri-shi, Nagano 399-6461 (JP); SHIOI, Kousuke c/o Showa Denko K.K., Shiojiri-shi, Nagano 399-6461 (JP)
(74) Representative: Strehl Schübel-Hopf & Partner
(86) International application number: PCT/JP2002/000697
(87) International publication number: WO 2002/060833

(56) References cited:
- EP-A1- 0 974 566
- JP-A- 8 034 669
- JP-A- 8 091 936
- JP-A- 63 176 367

## Description

### Technical Field:

The present invention relates to a sintered product which is endowed with high hardness and excellent wear resistance and is useful as wear resistant material for fabricating cutting tools, bearings, wire-drawing dies, etc.

### Background Art:

Conventionally, tungsten carbide (WC)-based super-hard materials have been employed as wear resistant materials for fabricating cutting tools and similar tools. However, these WC-based super-hard materials encounter difficulty in satisfying users' demands, since the demands are becoming increasingly stringent. Thus, development of wear resistant materials of more excellent properties is desired.

Wear resistant materials that meet the above demands have already been proposed. For example, there have been proposed a sintered product of cubic boron nitride (hereinafter referred to as cBN) powder to which a metallic phase containing a small amount of Al and at least one alloying element selected from the group consisting of Ni, Co, Mn, Fe and V is incorporated (JP-A SHO 48-17503) and a cBN sintered product obtained by use of a ceramic binder (JP-B SHO 57-3631).

In recent years, performance of cutting machines has been remarkably enhanced, and cutting speed is prone to increase more and more so as to meet a demand for energy conservation. Thus, even when a cutting tool made of any of the aforementioned cBN sintered products is employed in high-speed cutting of, for example, cast iron, wear resistance of the tool deteriorates to thereby problematically shorten the service life thereof.

The cBN sintered products disclosed in the above JP-A SHO 48-17503 or JP-B SHO 57-3631 cannot attain sufficient wear resistance during cutting of cast iron under high-speed conditions. A conceivable reason for the former case is that the temperature of the cutting edge is elevated by cutting heat generated under high-speed cutting conditions and that although the heat causes cBN grains to be firmly retained in the sintered product to thereby promote densification of the product, reaction occurs between a material to be cut and a binder formed of an alloying element, such as Ni, Co, Fe, Mn or V, which is highly reactive with the material to be cut to thereby deteriorate wear resistance. In contrast, as in the latter case, when TiN or similar ceramic which is less reactive with a material to be cut and which has poor ability to retain cBN grains is employed as a binder, falling of cBN grains easily occurs. In addition, the cBN content generally cannot be increased to a high level due to difficulty in densification of the sintered product. Thus, sufficient wear resistance cannot be attained.

EP-A1-974566 discloses sintered material which includes cubic boron nitride and a binder containing WCoB type boron compounds which comprise a Group IVa, Va or VIa element and a Group VIII element.

JP-A-8-34669 discloses sintered material which includes cubic boron nitride and a binder comprising nitrides, carbides or borides containing Group IVa, Group Va or Group VIa element, and a boride containing a Group VIII element and a Group IVa, Group Va or Group VI element.

WO-A-00/47537 discloses a sintered cubic boron nitride containing a binder which contains a nitride, carbide or boride, W₂Co₂₁B₆, and an Al compound.

One object of the present invention is to provide a cBN sintered product low in reactivity with a material to be cut and excellent in wear resistance while maintaining excellent ability to maintain cBN grains therein.

Another object of the invention is to provide a cBN sintered product enhanced in thermal resistance and thermal conductivity of a binder and improved in wear resistance even in high-speed cutting of cast iron.

Still another object of the invention is to provide a cBN sintered product that can be cut by means of a wire-cut machine utilizing arc discharge, thereby attaining easy processability after sintering.

### DISCLOSURE OF THE INVENTION:

The present invention provides the following.
[1] A sintered product that contains cubic boron nitride; and a binder that comprises at least one species selected from among nitrides, carbides, carbide nitrides and borides of a Group IVa, Group Va or Group VIa element; W₂CoB₂; and an Al compound.
[2] The sintered product according to [1], wherein the nitrides, carbides, carbide nitrides and borides of a Group IVa, Group Va or Group VIa element are TiN, TiC, TiCₓN₁₋ₓ (0<x<1), TiB₂, WC, WB and W₂B.
[3] The sintered product according to [1] or [2], wherein the Al compound is AlN or AlB₂.
[4] The sintered product according to any one of [1] to [3], wherein the cubic boron nitride is in an amount falling within a range of 50 to 95 area %; and the binder contains the at least one species selected from among nitrides, carbides, carbide nitrides and borides of a Group IVa, Group Va or Group VIa element in an amount falling within a range of 58 to 98 area % and W₂CoB₂ in an amount falling within a range of 2 to 42 area %, each based on a total amount of the binder.
[5] The sintered product according to any one of [1] to [4], wherein the cubic boron nitride is in an amount falling within a range of 50 to 95 area %; and the binder contains the at least one species selected from among nitrides, carbides, carbide nitrides and borides of a Group IVa, Group Va or Group VIa element in an amount falling within a range of 36 to 78 area %, W₂CoB₂ in an amount falling within a range of 2 to 43 area % and the Al compound in an amount falling within a range of 16 to 33 area %, each based on a total amount of the binder.
[6] A cutting tool employing the sintered product according to any one of [1] to [5].
As described in the foregoing, there can be obtained a cBN sintered product low in reactivity with a material to be cut and excellent in wear resistance while maintaining excellent ability to retain cBN grains therein, when containing the compounds as defined in claim 1.

### Best Mode for Carrying out the Invention:

The present inventors have made earnest studies to obtain a cBN sintered product excellent in wear resistance, and have found that a cBN sintered product can attain excellent wear resistance, lower reactivity with a material to be cut while maintaining excellent ability to retain cBN grains therein, when containing, as a binder, at least one species selected from among nitrides, carbides, carbide nitrides and borides of a Group IVa, Group Va or Group VIa element, W₂CoB₂ and an Al compound. The inventors have also found that heat resistance and thermal conductivity of the aforementioned binder can be enhanced to thereby synergistically further improve wear resistance of a cutting tip of a tool that is subjected to high temperature conditions during high-speed cutting. The inventors have also found that the sintered product can be cut by means of a wire-cut machine utilizing arc discharge, thereby attaining easy processability after sintering. The present invention has been accomplished on the basis of these findings.

Examples of nitrides, carbides, carbide nitrides and borides of a Group IVa, Group Va or Group VIa element, serving as binder components incorporated in the sintered product of the present invention include TiC, TiB₂, Ti₂B₅, Ti₃B₄, TiB, TiN, Ti₂N, TiCₓN₁₋ₓ (0<x<1), ZrC, ZrB₂, ZrB₁₂, ZrN, ZrCₓN₁₋ₓ (0<x<1), HfC, HfB₂, HfB, HfB₁₂, Hf₃N₂, HfN, Hf₄N₃, HfCₓN₁₋ₓ (0<x<1), VC, V₄C₃, V₈C₇, VB₂, V₃B₄, V₃B₁₂, VB, V₅B₆, V₂B₂, VN, V₂N, VCₓN₁₋ₓ (0<x<1), NbC, Nb₆C₅, Nb₂C, NbB_{2,} Nb₃B₂, NbB, NbN, Nb₄N₃, Nb₂N, NbCₓN₁₋ₓ (0<x<1), TaC, Ta₂C, TaB₂, Ta₂B, Ta₃B₂, TaB, Ta₃B₄, TaN, Ta₃N₅, Ta₄N, Ta₂N, TaCₓN₁₋ₓ (0<x<1), Cr₃C₂, Cr₂C, Cr₂₃C₆, Cr₇C₃, CrB, CrB₄, Cr₂B, Cr₂B₃, Cr₅B₃, CrB₂, Cr₂N, CrN, Mo₂C, MoC, MoB, Mo₂B₅, MoB₄, Mo₂B, MoB₂, WC, W₂C, WB, W₂B, WB₄, WN, W₂N, a solid solution thereof, a multi-component compound thereof and a compound thereof having an unspecific composition. Of these, TiN, TiC, TiCₓN₁₋ₓ (0<x<1), TiB₂, WC, WB and W₂B are particularly preferred.

Examples of the Al compound include AlB₁₂, AlB₁₀, AlB₂, Al₃B₄₈C₂, Al₈B₄C₇, AlB₁₂C₂ and AlN. Of these, AlN and AlB₂ are particularly preferred.

When a nitride, carbide, carbide nitride and/or boride of a Group IVa, Group Va or Group VIa element is incorporated into a binder for producing a cBN sintered product, reactivity of the sintered product with a material to be cut can be reduced, and hardness of the binder itself can be increased. When W₂CoB₂ is incorporated into a binder for producing a cBN sintered product, mechanical strength and toughness of the sintered product can be increased; densification of the sintered product can be enhanced; reactivity of the sintered product with a material to be cut can be reduced; and wear resistance under high-speed cutting conditions can be increased. When an Al compound is added to the binder, heat resistance, thermal conductivity, etc. of the binder can be enhanced to thereby further improve characteristics of the cBN sintered product.

The sintered product of the present invention contains cBN preferably in an amount of 50 to 95 area %, more preferably 55 to 95 area %, most preferably 60 to 95 area %, and the balance being preferably a binder.

The term "area %" used herein refers to a percent area of a relevant component contained in a composition observed on a polished surface of a portion of the sintered product. Although the area % may be determined by means of a metallographical microscope or a similar apparatus, the cBN content and the crystal composition of a binder is generally measured by means of an X-ray diffraction apparatus, an electron beam microanalyzer or a graphic image analyzer.

When the cBN content is less than 50 area %, hardness and thermal conductivity sufficient for use in high-speed cutting cannot be attained, whereas when the cBN content is in excess of 95%, attaining densification of the sintered product disadvantageously requires high sintering temperature and pressure. The cBN powder to be used suitably has an average particle size falling within a range of 6 to 0.1 µm, preferably 3 to 0.1 µm.

The binder contains species selected from among nitrides, carbides, carbide nitrides and borides of a Group IVa, Group Va or Group VIa element preferably in an amount falling within a range of 58 to 98 area %, more preferably 65 to 98 area %, most preferably 74 to 98 area %; and W₂CoB₂ in an amount falling within a range of 2 to 42 area %, more preferably 2 to 35 area %, most preferably 2 to 26 area %, each based on the total amount of the binder.

The binder contains species selected from among nitrides, carbides, carbide nitrides and borides of a Group IVa, Group Va or Group VIa element preferably in an amount falling within a range of 36 to 78 area %, more preferably 40 to 75 area %, most preferably 50 to 70 area %; W₂CoB₂ preferably in an amount falling within a range of 2 to 43 area %, more preferably 2 to 39 area %, most preferably 2 to 35 area %; and an Al compound preferably in an amount falling within a range of 16 to 33 area %, more preferably 20 to 33 area %, most preferably 25 to 33 area %.

When at least one species selected from among nitrides, carbides, carbide nitrides and borides of a Group IVa, Group Va or Group VIa element is contained in an amount less than 36%, effects on reduction of reactivity with a material to be cut and on enhancement of hardness of the binder are insufficient, whereas when the amount is in excess of 78%, toughness of the sintered product is lowered. In addition, when W₂CoB₂ is contained in an amount less than 2%, effects on enhancement of mechanical strength and toughness of the sintered product are insufficient, whereas when the amount is in excess of 43%, hardness of the sintered product is lowered. When the Al compound content is less than 16%, effects on enhancement of heat resistance and thermal conductivity of the binder are insufficient, whereas when the content is in excess of 33%, hardness of the sintered product is lowered. These are not preferred.

In order to obtain the sintered product of the present invention, the following procedure may be followed. Specifically, powder of at least one species selected from among nitrides, carbides, carbide nitrides and borides of a Group IVa, Group Va or Group VIa element and powder of W₂CoB₂ are mixed together. Powder of an Al compound can be added to the mixture. The resultant mixture is heated in accordance with needs, or is not subjected to heat treatment, and sintered under ultrahigh pressure at high temperature. The sintered product of the present invention can also be produced by use of any combination of powders other than those employed in the above case.
In other words, any combination may be employed so long as the cBN sintered product of the present invention containing a binder of a composition and area % falling within a range of the present invention can be produced through heat treatment of the powder mixture and sintering under high pressure.

For example, in the case in which another combination of powders is employed, starting material powders may be of element metals of Group IVa, Group Va, or Group VIa; Al; alloys thereof; intermetallic compounds thereof; boron, carbon, boron carbide, and boron nitride; carbides, nitrides, carbide nitrides, borides, boride nitrides, and boride carbides of Al, those of a Group IVa, Group Va, or Group VIa element; a multi-component compound thereof; solid solution thereof; or a compound having an unspecific composition. These powders are mixed together, and the resultant mixture is heated in accordance with needs, or is not subject to heat treatment, and sintered under ultrahigh pressure at high temperature. In this case, cBN powder can serve as a nitrogen source or a boron source for forming a binder.

During production of the sintered product of the present invention, heat treatment is performed preferably in a vacuum or a non-oxidizing atmosphere of, for example, N₂ or Ar. In addition, in order to produce the product of the present invention, a pressure of 4.5 GPa or higher and a temperature of 1,400°C or higher are preferably employed. Sintering must be performed under conditions in which cBN remains stable. If sintering temperature is lower than 1,400°C, obtaining the sintered product of the present invention requires a long period of time. Also, in a production method in which a binder of interest is generated through heating, such a low temperature may lead to insufficient generation of the target binder. Thus, in some cases, residues, such as metallic Co, generate to thereby deteriorate wear resistance of the sintered product.

The sintered product thus obtained is cut off by means of a wire-cut machine utilizing arc discharge to form a wear resistant cutting tool.
The Examples of the present invention will be described below,

### Examples 1 to 15 and Comparative Examples 1 to 8:

As shown in Table 1, cBN powder (average particle size: 1 µm) and binder components were weighed and mixed to yield raw material powders, and each powder was wet-kneaded for 24 hours by use of a ball mill to thereby yield slurry. Acetone (special grade chemical) was used as a solvent for mixing. The slurry was sufficiently dried, and subsequently, the dried matter was introduced into an ultrahigh-pressure sintering apparatus and sintered for one hour under the conditions shown in Table 1 to thereby yield a sintered product (diameter: 29 mm, thickness: 5 mm). The top and bottom surfaces of the sintered product were ground with diamond wheel stone.

**Table 1 (1/3)**

| | Components and compositional proportions (wt.%) | cBN content (area %) | Sintering temp. (°C) | Crystal composition (proportions) of binder | | | | | | Width of flank wear (mn) |
|---|---|---|---|---|---|---|---|---|---|---|
| | | | | (1) | (2) | (3) | Area % of (1) | Area % of (2) | Area % of (3) | |
| Ex. 1* | cBN(87), Ti₂AlN(8), WC-Co(5) cBN(87), | 90 | 1,500 | TiN, TiB₂, WC | WCoB, W₂Co₂₁B₆ | AlN, AlB₂ | 40 | 39 | 21 | 0.10 |
| Ex. 2* | cBN(B5), Ti₂AlN(11), WC-Co(5) | 85 | 1,500 | TiN, TiB₂, WC | WCoB, W₂Co₂₁B₆ | AlN | 55 | 25 | 20 | 0.12 |
| Ex. 3* | cBN(85), TiN(5), WC-Co(10) | 85 | 1,500 | TiB₂, TiB₂ | WCoB, W₂Co₂₁B₆ | - | 74 | 26 | - | 0.15 |
| Ex. 4 | cBN(85), Ti₂AlN(15), WC-Co(10) | 80 | 1, 500 | TiN, TiB₂, WB | W₂CoB₂ | AlN, AlB₂ | 64 | 8 | 28 | 0.11 |
| Ex. 5* | cBN(85), TiN(5), TiC(5), cBN(85), TiN(5), TiC(5), WC-Co(15) | 80 | 1,500 | TiN, TiC, TiB₂, WB | WCoB | - | 89 | 11 | - | 0.15 |
| Ex. 6 | cBN(74), Ti₂AlN (21), WC-Co(5) | 76 | 1,500 | TiN, TiB₂, WC, WB | W₂CoB₂ | AlN | 66 | 3 | 31 | 0.12 |
| Ex. 7* | cBN(74), TiN(21), WC-Co (5) | 75 | 1,500 | TiN, TiB₂, WC, WB | W₂CoB₂ | - | 95 | 5 | - | 0.14 |

| | | | | | | | | | | |
|---|---|---|---|---|---|---|---|---|---|---|
| (1) Group IVa, Va and VIa compounds (2) Group IVa, Va and VIa compounds Group VIII borides (3) Al compounds * not belonging to the scope of the present invention | | | | | | | | | | |

**Table 1 (2/3)**

| | Components and compositional proportions (wt.%) | cBN content (area %) | Sintering temp. (°C) | Crystal composition (proportions) of binder | | | | | | Width of flank wear (mm) |
|---|---|---|---|---|---|---|---|---|---|---|
| | | | | (1) | (2) | (3) | Area % of (1) | Area % of (2) | Area % of (3) | |
| Ex. 8 | cBN(66), Ti₂AlN(20), TiC (4), WC-Co (10) | 70 | 1,500 | TiN, TiC, TiB₂, WC, WB | W₂CoB₂ | AlN, AlB₂ | 64 | 6 | 30 | 0.13 |
| Ex. 9* | cBN(66), TiN(12), TiC (12), WC-Co (10) | 70 | 1,500 | TiN, TiC, TiB₂, WC, WB | W₂CoB₂ | - | 91 | 9 | - | 0.15 |
| Ex. 10 | cBN(65), TaN(10), TiN(10), Al (5), WC-Co (10) | 65 | 1,500 | TiN, TaN, TiB₂, WC | W₂CoB₂ | AlN, AlB₂ | 64 | 8 | 28 | 0.16 |
| Ex. 11* | cBN (65)_{,} TaN (10), TiN (20), WC-Co (5) | 65 | 1,500 | TiN, TaN, TiB₂, WC | W₂CoB₂ | - | 95 | 5 | - | 0.20 |
| Ex. 12 | cBN (64), Ti₂AlN (32), WC-Co (4) | 64 | 1,500 | TiN, TiB₂ | W₂CoB₂ | AlN | 65 | 4 | 31 | 0.15 |
| Ex. 13 | cBN(54), TiN(15), TiC(20), Al (8), WC-Co(5) | 50 | 1,500 | TiC, TiN, TiB₂, W₂B | W₂CoB₂ | AlN, AlB₂ | 63 | 5 | 32 | 0.21 |
| Ex. 14* | cBN(54), TiN(20), TiC(23), WC-Co (5) | 50 | 1,500 | TiC, TiN, TiB₂, W₂B | W₂CoB₂ | - | 98 | 2 | - | 0.25 |
| Ex. 15 | cBN(54), Ti₂AlN(43), WC-Co(3) | 50 | 1,500 | WC, W₂B | W₂COB₂ | AlN | 66 | 2 | 32 | 0.22 |

| | | | | | | | | | | |
|---|---|---|---|---|---|---|---|---|---|---|
| (1) Group IVa, Va and VIa compounds (2) Group IVa, Va and VIa compounds & Group VIII borides (3) Al compounds * not belonging to the scope present invention | | | | | | | | | | |

**Table 1 (3/3)**

| | Components and compositional proportions (wt %) | cBN content (area %) | Sintering temp. (°C) | Crystal composition (proportions) of binder | | | | | | Width of flank wear (mm) |
|---|---|---|---|---|---|---|---|---|---|---|
| | | | | (1) | (2) | (3) | Area % (1) | Area % of (2) | Area % of(3) | |
| Comp. Ex. 1 | cBN (90), Al (5), WC-Co (5) | 90 | 1,500 | - | W₂Co₂₁B₆ | WCoB, AlN, AlB₂ | - | 50 | 50 | Life end 6,000 m |
| Comp. Ex. 2 | cBN(84), TiN(5), TiC(5), Al(6). | 90 | 1,200 | TiN TiC, TiB₂ | - | AlN AlB₂ | 32 | - | 68 | Life end 2,000 m |
| Comp. Ex. 3 | cBN(80), Tic(10), Al(10) | 85 | 1,200 | TiC, | TiB₂ AlB₂ | AlN, | 23 | - | 77 | Life end 2,500 m |
| Comp. Ex. 4 | cBN (74), TiAl₃ (21), WC(5) | 80 | 1,200 | TiB₂, WC | TiN, AlN, | AlB₂ | 34 | - | 66 | Life end 2,000 m |
| Comp. Ex. 5 | cBN(61), TiC(18), Al(16), WC(5) | 70 | 1,200 | TiB₂, WC | TiC, AlN, | AlB₂ | 26 | - | 74 | Life end 2,000 m |
| Comp. Ex. 6 | cBN(58), TiCN(22), Al(15), WC (5) | 70 | 1,200 | TiCH, TiB₂, WC | - | AlN, AlB₂ | 30 | - | 70 | Life end 3,000m |
| Comp. Ex. 7 | cBN(45), TiN(42), Al(13) | 60 | 1,200 | TiB₂ | TiN, - AlN, | AlB₂ | 45 | - | 55 | Life end 2,500 m |
| Comp. Ex. 8 | cBN(35), TiC(48), Al(13), WC(5) | 50 | 1,200 | TiB₂ | TiC, - AlN, | AlB₂ | 51 | - | 49 | Life end 3,000 m |

| | | | | | | | | | | |
|---|---|---|---|---|---|---|---|---|---|---|
| (1) Group IVa, Va and VIa compounds (2) Group IVa, Va and VIa compounds & Group VIII borides (3) Al compounds | | | | | | | | | | |

The sintered product was cut into tips (13 mm x 13 mm) by means of a wire-cut machine utilizing arc discharge, and each tip was processed into a cutting tool of the shape specified by JIS/SNMN120308.

The tool was evaluated in terms of wear resistance and the anti-falling property of cBN grains (i.e., chipping resistance of cutting edge) through a dry high-speed cutting test by turning. The cutting test was performed under the following conditions: material to be cut = FC 250; cutting speed = 650 m/min; depth of cut = 2.0 mm; feed per revolution = 0.3 mm/revolution; and cutting length = 10,000 m.

After completion of the cutting test, the width of flank wear of the tested cutting edge sample was measured. In addition, a portion of the sample was polished, and the polished surface was analyzed by means of an X-ray diffraction apparatus, an electron beam microanalyzer and a graphic image analyzer to thereby determine the cBN content and the crystal composition of the binder. Table 1 shows the results. When the width of the flank wear of the cutting edge reached 0.3 mm, the end of tool life (service life) was judged to have reached, and the test was terminated.

As is clear from Table 1, the sintered product of the present invention exhibits a small width of flank wear as compared with similar conventional sintered products, and high wear resistance and anti-falling property of cBN grains can be attained.

### Industrial Applicability:

The sintered cBN product of the present invention attains excellent wear resistance and anti-falling property of cBN grains as compared with similar conventional sintered products, even when the product is used under severe working conditions. Particularly, when the sintered product is used as a cutting tip, there can be attained excellent cutting performance; e.g., reduced width of flank wear, as compared with conventional cBN sintered product tips. Thus, the frequency of replace of tips during cutting or lathe turning can be reduced to thereby attain high productivity.

## Claims

1. A sintered product that contains cubic boron nitride; and a binder that comprises at least one species selected from among nitrides, carbides, carbide nitrides and borides of a Group IVa, Group Va or Group VIa element; W₂CoB₂; and an Al compound.

2. The sintered product according to claim 1, wherein the nitrides, carbides, carbide nitrides and borides of a Group IVa, Group Va or Group VIa element are TiN, TiC, TiCₓN₁₋ₓ (0<x<1), TiB₂, WC, WB and W₂B.

3. The sintered product according to claim 1 or 2, wherein the Al compound is AlN or AlB₂.

4. The sintered product according to any one of claims 1 to 3, wherein the cubic boron nitride is in an amount falling within a range of 50 to 95 area %; and the binder contains the at least one species selected from among nitrides, carbides, carbide nitrides and borides of a Group IVa, Group Va or Group VIa element in an amount falling within a range of 58 to 98 area % and W₂CoB₂ in an amount falling within a range of 2 to 42 area %, each based on a total amount of the binder.

5. The sintered product according to any one of claims 1 to 4, wherein the cubic boron nitride is in an amount falling within a range of 50 to 95 area %; and the binder contains the at least one species selected from among nitrides, carbides, carbide nitrides and borides of a Group IVa, Group Va or Group VIa element in an amount falling within a range of 36 to 78 area %, W₂CoB₂ in an amount falling within a range of 2 to 43 area % and the Al compound in an amount falling within a range of 16 to 33 area %, each based on a total amount of the binder.

6. A cutting tool employing the sintered product according to any one of claims 1 to 5.

## Patentansprüche

1. Sinterprodukt, das kubisches Bornitrid und ein Bindemittel enthält, das mindestens ein unter Nitriden, Carbiden, Carbidnitriden und Boriden eines Elements der Gruppe IVa, Gruppe Va oder Gruppe VIa ausgewähltes Mitglied, W₂CoB₂ und eine Al-Verbindung enthält.

2. Sinterprodukt nach Anspruch 1, wobei die Nitride, Carbide, Carbidnitride und Boride eines Elements der Gruppe IVa, Gruppe Va oder Gruppe VIa TiN, TiC, TiCₓN₁₋ₓ (0<x<1), TiB₂, WC, WB und W₂B sind.

3. Sinterprodukt nach Anspruch 1 oder 2, wobei die Al-Verbindung AlN oder AlB₂ ist.

4. Sinterprodukt nach einem der Ansprüche 1 bis 3, wobei das kubische Bornitrid in einer Menge im Bereich von 50 bis 95 Flächen-% vorhanden ist und das Bindemittel das mindestens eine unter Nitriden, Carbiden, Carbidnitriden und Boriden eines Elements der Gruppe IVa, Gruppe Va oder Gruppe VIa ausgewählte Mitglied in einer Menge im Bereich von 58 bis 98 Flächen-% und W₂CoB₂ in einer Menge im Bereich von 2 bis 42 Flächen-%, jeweils bezogen auf die Gesamtmenge des Bindemittels, enthält.

5. Sinterprodukt nach einem der Ansprüche 1 bis 4, wobei das kubische Bornitrid in einer Menge im Bereich von 50 bis 95 Flächen-% vorhanden ist und das Bindemittel das mindestens eine unter Nitriden, Carbiden, Carbidnitriden und Boriden eines Elements der Gruppe IVa, Gruppe Va oder Gruppe VIa ausgewählte Mitglied in einer Menge im Bereich von 36 bis 78 Flächen-%, W₂CoB₂ in einer Menge im Bereich von 2 bis 43 Flächen-% und die Al-Verbindung in einer Menge im Bereich von 16 bis 33 Flächen-%, jeweils bezogen auf die Gesamtmenge des Bindemittels, enthält.

6. Schneidwerkzeug, welches das Sinterprodukt nach einem der Ansprüche 1 bis 5 einsetzt.

## Revendications

1. Produit fritté qui contient du nitrure de bore cubique ; et un liant qui comprend au moins une espèce choisie parmi les nitrures, carbures, carbonitrures et borures d'un élément du groupe IVa, du groupe Va ou du groupe VIa ; W₂CoB₂ ; et un composé de Al.

2. Produit fritté selon la revendication 1 où les nitrures, carbures, carbonitrures et borures d'un élément du groupe IVa, du groupe Va ou du groupe VIa sont TiN, TiC, TiCₓN₁₋ₓ (0<x<1), TiB₂, WC, WB et W₂B.

3. Produit fritté selon la revendication 1 ou 2 où le composé de Al est AIN ou AlB₂.

4. Produit fritté selon l'une quelconque des revendications 1 à 3 où le nitrure de bore cubique est en une quantité située dans une plage de 50 à 95 % en aire ; et le liant contient la au moins une espèce choisie parmi les nitrures, carbures, carbonitrures et borures d'un élément du groupe IVa, du groupe Va ou du groupe VIa en une quantité située dans une plage de 58 à 98 % en aire et W₂CoB₂ en une quantité située dans une plage de 2 à 42 % en aire, chacun basé sur une quantité totale du liant.

5. Produit fritté selon l'une quelconque des revendications 1 à 4 où le nitrure de bore cubique est en une quantité située dans une plage de 50 à 95 % en aire ; et le liant contient la au moins une espèce choisie parmi les nitrures, carbures, carbonitrures et borures d'un élément du groupe IVa, du groupe Va ou du groupe VIa en une quantité située dans une plage de 36 à 78 % en aire, W₂CoB₂ en une quantité située dans une plage de 2 à 43 % en aire et le composé de Al en une quantité située dans une plage de 16 à 33 % en aire, chacun basé sur une quantité totale du liant.

6. Outil de coupe employant le produit fritté selon l'une quelconque des revendications 1 à 5.
